# EUROPÄISCHE PATENTSCHRIFT

(11) **EP 4 091 971 B1**
(45) Veröffentlichungstag und Bekanntmachung des Hinweises auf die Patenterteilung: **26.03.2025**
(21) Anmeldenummer: 21175288.6
(22) Anmeldetag: 21.05.2021
(51) Int. Cl.: B65G 17/48, B66C 13/06

(54) **VORRICHTUNG ZUM STABILISIEREN VON TELESKOPSCHEREN MIT MEHREREN ZUGMITTELN**
DEVICE FOR STABILIZING TELESCOPIC SHEARS WITH MULTIPLE TRACTION MEANS
DISPOSITIF DE STABILISATION DE GLISSIÈRE TÉLESCOPIQUE POURVU DE MULTIPLES MOYENS DE TRACTION

(43) Veröffentlichungstag der Anmeldung: 23.11.2022
(73) Patentinhaber: Siemens Aktiengesellschaft, 80333 München (DE)
(72) Erfinder: Janssen, Peter, 64807 Dieburg (DE); Schwank, Andreas, 65451 Kelsterbach (DE)
(74) Vertreter: Siemens Patent Attorneys

(56) Entgegenhaltungen:
- DE-A1- 102004 045 516
- DE-A1- 3 636 459
- US-A- 4 273 242

## Beschreibung

Die Erfindung betrifft eine Anordnung mit synchron gekoppelten Teleskopstreben gemäß dem Oberbegriff des Patentanspruchs 1.

Die Erfindung betrifft eine Vorrichtung zum Heben und Stabilisieren von Lasten, insbesondere Gehänge für Fahrzeuge oder Fahrzeugteile, bestehend aus einem Rahmen sowie einer darunter angeordneten, die Last aufnehmenden Traverse, die über an der Traverse befestigte Hubseile höhenverstellbar ist und die mittels zweier sich kreuzender, im Wesentlichen in einer parallel zur Fahrrichtung des Rahmens gedachten Vertikalebene verlaufender, einerseits am Rahmen und andererseits an der Traverse verschwenkbar angelenkter Teleskopstreben stabilisierbar ist.

Derartige Vorrichtungen werden vor allem in der Automobilfertigung verwendet, um Fahrzeugteile oder das zu fertigende Fahrzeug in seiner jeweiligen Fertigungsstufe zwischen den einzelnen Montageorten zu transportieren. Der Rahmen ist zu diesem Zweck gewöhnlich an einer Schiene horizontal verfahrbar, die Traverse ist über die daran angelenkten Hubseile mittels am Rahmen angeordneter Hubzüge höhenverstellbar.

Die Aufhängung der Last sollte, insbesondere wenn es sich um ein für die Montage bereitgestelltes Fahrzeug handelt, möglichst stabil sein, denn viele Montagevorgänge laufen voll automatisiert ab, wobei es auf eine genaue Positionierung der Tragvorrichtung ankommt, was wiederum eine möglichst stabile Aufhängung der Last an der Traverse erfordert. Da bloße Seiltriebe mit vertikalen Tragseilen nicht geeignet sind, das Pendeln der Last in allen Richtungen gleichermaßen sicher zu verhindern, werden neben den Seilverspannungen Knickarme oder Scheren eingesetzt, die einerseits am Rahmen und andererseits an der Traverse angelenkt werden und die Last gegen Schwingen oder Pendeln oder gegen Drehschwingungen stabilisieren, ohne die Hub- und Senkbewegungen zu behindern.

Die zahlreichen bekannten Lösungen sind aufwendig, schwer und teuer. So wird in der deutschen Patentanmeldung DE 36 36 459 A1 eine gattungsbildende Vorrichtung zur Führung einer Last beschrieben, die gleichsam aus einem verfahrbaren Rahmen besteht, an dem eine Traverse höhenverstellbar angelenkt ist.

Zum Stabilisieren von fördertechnischen Baugruppen zum Heben und Senken von Lasten (sogenannte "Gehänge") werden häufig Teleskopstreben (kurz: Teleskope) eingesetzt. Dabei wird ein Innenrohr, das in einem Außenrohr verlagert ist, während der Hub- oder Senkbewegung ein- oder ausgefahren. Um Pendelbewegungen der Last in und entgegen der Verfahrrichtung des Rahmens zu vermeiden, sind dabei zwei solcher längenveränderbarer Teleskopstreben kreuzend zwischen Rahmen und Traverse vorgesehen, die in ihren Endbereichen einerseits an der Traverse und andererseits am Rahmen gelenkig befestigt sind und dazu dienen, die in Fahrtrichtung der Tragvorrichtung auftretenden Kräfte aufzunehmen.

Das Heben der Last erfolgt bei dieser Lösung über die Hubseile, die in den Eckbereichen der Traverse angelenkt sind und über Umlenkrollen in den Eckbereichen des Rahmens zu einem zentral auf dem Rahmen angeordneten Hubmittel (z.B. Antrieb mit Seiltrommeln) geführt sind. Zur Synchronisation der Ein- und Ausfahrbewegung der Teleskopstreben sind diese über einen Seilverbund aus Spannseilen stabilisiert und synchronisiert.

Solche Anordnungen mit seilbasierter Synchronisierung sind in DE 10 2004 045 516 A1 - Aßmann "Vorrichtung zum Heben und Stabilisieren von Lasten" offenbart, wobei eine die Bewegung der Teleskope synchronisierende Seilführung so gewählt ist, dass seitliche Pendelbewegungen gedämpft werden.

Aus dem beschriebenen Effekt der Seilverspannung ergeben sich beim geschilderten Stand der Technik Nachteile, beispielsweise weil durch die Seilführung durch die Schwenklager der Teleskopstreben eine ständige Ver- und Entdrillung der üblicherweise verwendeten Stahlseile und somit Seillängung und Verschleiß auftritt. Das Problem der Konstruktion bildet somit eine unerwünschte Längenänderung der Teleskopstreben infolge von in Traversenlängsrichtung angreifender Kräfte. Die Längung der Seile muss regelmäßig durch Nachspannen und regelmäßige Justierung ausgeglichen werden; gleiches gilt für Setzvorgänge, Schlupf und andere Abweichungen, die im Laufe der Zeit auftreten können. Zudem sind Montage, Justierung und Wartung nicht trivial und damit teuer und zeitaufwendig.

Es ist daher eine Aufgabe der vorliegenden Erfindung, eine konstruktiv einfache, funktionelle und wartungsarme Konstruktion für die Synchronisierung des Verfahrens der Teleskopstreben vorzuschlagen.

Es ist eine Kernidee der erfindungsgemäßen Lösung dieser Aufgabe, die Verspannung und Stabilisierung der Teleskopstreben mithilfe von zumindest 3 formschlüssigen Zugmitteln (z.B. Zahnriemen) vorzunehmen.

Die Aufgabe wird insbesondere durch die Anordnung nach Patentanspruch 1 gelöst.

Dabei wird eine Vorrichtung zum Heben und Stabilisieren von Lasten vorgeschlagen, ins-besondere Gehänge für Fahrzeuge oder Fahrzeugteile, bestehend aus einem Rahmen sowie einer darunter angeordneten, die Last aufnehmenden Traverse, die über an der Traverse befestigte Hubmittel höhenverstellbar ist, und die mittels zwei sich kreuzender, im Wesentlichen in einer parallel zur Verfahrrichtung des Rahmens gedachten Vertikalebene verlaufender, einerseits am Rahmen und andererseits an der Traverse je ein Innenrohr und ein Außenrohr aufweisende verschwenkbar angelenkter Teleskopstreben stabilisierbar ist, die ihrerseits gegen unerwünschte Längenänderungen infolge in Traversenlängsrichtung angreifender Kräfte zu einem synchronen Ein- und Ausfahren miteinander verbunden sind. Dabei erfolgt die Verbindung der Teleskopstreben mittels drei formschlüssiger Zugmittel, wobei je ein erstes formschlüssiges Zugmittel jeweils im Innenrohr einer Teleskopstrebe mit je einer inneren Scheibe und einer äußeren Scheibe an beiden Enden gelagert ist, wobei ein drittes formschlüssiges Zugmittel horizontal zwischen den zwei Teleskopstreben auf zwei drehbaren Scheiben gelagert ist, wobei die jeweils auf einer Seite befindlichen Scheiben des jeweiligen ersten Zugmittels und des dritten Zugmittels derart miteinander verbunden sind, dass sich Drehbewegungen zwischen beiden Scheiben übertragen lassen, und wobei an der Innenwand der beiden Außenrohre das jeweilige erste formschlüssige Zugmittel befestigt ist, so dass eine Drehbewegung der ersten Scheiben zu einem entsprechenden synchronen Verfahren der Teleskopstreben führt. Damit ist eine konstruktiv einfache und wartungsarme Stabilisierung einer Hubvorrichtung gegeben.

Vorteilhafte Ausgestaltungen der erfindungsgemäßen Teleskopstrebe sind in den abhängigen Patentansprüchen angegeben.

Die dabei beschriebenen Merkmale und deren Vorteile können sowohl einzeln als auch in sinnvoller Kombination miteinander realisiert werden.

Vorteilhaft sind die ersten Zugmittel durch jeweils einen Zahnriemen gebildet, und die inneren und die äußeren Scheiben sind als Zahnriemenscheiben ausgebildet. Dadurch ergibt sich ein leiser und gleichmäßiger Lauf. Zudem sind Zahnriemen langzeitstabil, so dass sich regelmäßiges Nachjustieren aufgrund von Längungen des Zugmittels oft erübrigt.

In einer alternativen Variante sind die ersten Zugmittel durch jeweils eine Kette gebildet und die inneren und die äußeren Scheiben als Kettenräder ausgebildet. Ketten können dabei oft größere Kräfte als Zahnriemen übertragen, zudem können Kettenlösungen oft auch bei problematischen Betriebsbedingungen oder beengten Einbauverhältnissen eingesetzt werden. Je nach Anforderung können auch Mischlösungen eingesetzt werden. Für das zweite formschlüssige Zugmittel, also die "Querverbindung" zur Übertragung der Bewegungsinformation zwischen den Teleskopstreben, können je nach Einsatzbedingungen wahlweise oder auch in Kombination miteinander Zahnriemen, Kettenlösungen oder auch Drehübertragungen **(z.B.** Wellenantriebe mit beidseitigen Umlenkgetrieben, **z.B.** Stirnradverzahnung) oder Kombinationen davon eingesetzt werden; alle diese Lösungen können in diesem Zusammenhang als ein formschlüssiges Zugmittel bezeichnet werden.

Vorteilhaft sind die äußere Scheibe und die damit verbundene Scheibe des dritten Zugmittels auf einer gemeinsamen Drehachse angeordnet, so dass Drehmomente direkt zwischen den beiden Scheiben übertragen werden.

Besonders vorteilhaft sind die äußeren Scheiben und die jeweiligen auf derselben Seite befindlichen Scheiben des dritten Zugmittels koaxial zum Schwenklager des jeweiligen Innenrohrs angeordnet, so dass bei einem Verfahren (Heben - Senken) der Anordnung kein Längenausgleich der ersten und/oder des dritten Zugmittels erforderlich ist.

Besonders für die Justierung im Zuge der Erstmontage, aber auch zu Wartungszwecken ist es vorteilhaft, wenn zumindest auf einer Seite die äußere Scheibe des ersten Zugmittels und die auf dieser Seite angeordnete Scheibe des dritten Zugmittels mittels einer Kupplung verbunden sind, wobei die Kupplung zu einer zumindest teilweisen Entkopplung der äußeren Scheibe des ersten Zugmittels und der Scheibe des dritten Zugmittels eingerichtet ist.

Vorteilhaft sind die Zugmittel mit einer Spannvorrichtung versehen, die bezüglich der ersten Zugmittel vorteilhaft innerhalb des jeweiligen Innenrohrs derart angeordnet ist, dass die Spannvorrichtung von außen zu betätigen ist, beispielsweise durch eine Wartungsöffnung. Die Spannvorrichtung des dritten Zugmittels kann realisiert werden, indem die Lagerböcke der Schwenklager an zumindest einem der Innenrohre und damit die damit koaxial angeordneten Scheiben verschiebbar sind, beispielsweise durch Langlöcher in der Verschraubung zur Traverse. Andere Spannvorrichtungen, beispielsweise durch ein Umlenkrollenpaar, sind möglich.

Die Kupplung kann vorteilhaft als Sicherheitskupplung ausgestaltet ist, wobei die Sicherheitskupplung bei Überschreiten eines Grenzdrehmoments zu der zumindest teilweisen Entkopplung eingerichtet ist. Damit kann bei Lastspitzen eine Zerstörung anderer Komponenten, insbesondere von Zahnriemen oder Ketten, verhindert werden. Die Sicherheitskupplung in einer einfachen und wirkungsvollen Konstruktion durch einen Scherstift oder eine Passfeder mit einer Sollbruchstelle gebildet ist, wobei mittels des Scherstifts oder der Passfeder im geschlossenen Zustand der Sicherheitskupplung eine Übertragung einer Drehbewegung zumindest einer der Scheiben auf die jeweils benachbarte Scheibe des anderen Zugmittels gegeben ist.

In einer Variante sind die Schwenklager der Innenrohre, die äußeren Scheiben und das zweite Zugmittel mit den zugeordneten drehbaren Scheiben an einer unteren Traverse der Vorrichtung angeordnet sind, und die Schwenklager der Außenrohre sind an dem oberen Rahmen angelenkt. Damit können die meisten Wartungsarbeiten bei abgelassener Hubvorrichtung gut zugänglich in Bodennähe vorgenommen werden. In einer alternativen Variante ist dagegen vorgesehen, dass die Schwenklager der Innenrohre, die äußeren Scheiben und das zweite Zugmittel mit den zugeordneten drehbaren Scheiben an dem oberen Rahmen der Vorrichtung angeordnet sind, und dass die Schwenklager der Außenrohre an der unteren Traverse angelenkt sind. Damit kann an der unteren Traverse Bauraum eingespart werden, zudem ist das zweite Zugmittel mit den Antriebselementen (Scheiben) vor Kollisionen im unteren Bereich besser geschützt.

Ein Ausführungsbeispiel einer erfindungsgemäßen Teleskopstrebe wird nachfolgend anhand der Zeichnung erläutert. Dabei zeigen:
- Figur 1: eine Seitenansicht (Schnittzeichnung) der abgesenkten Vorrichtung, und
- Figur 2: die Vorrichtung im eingefahrenen (gehobenen) Zustand,

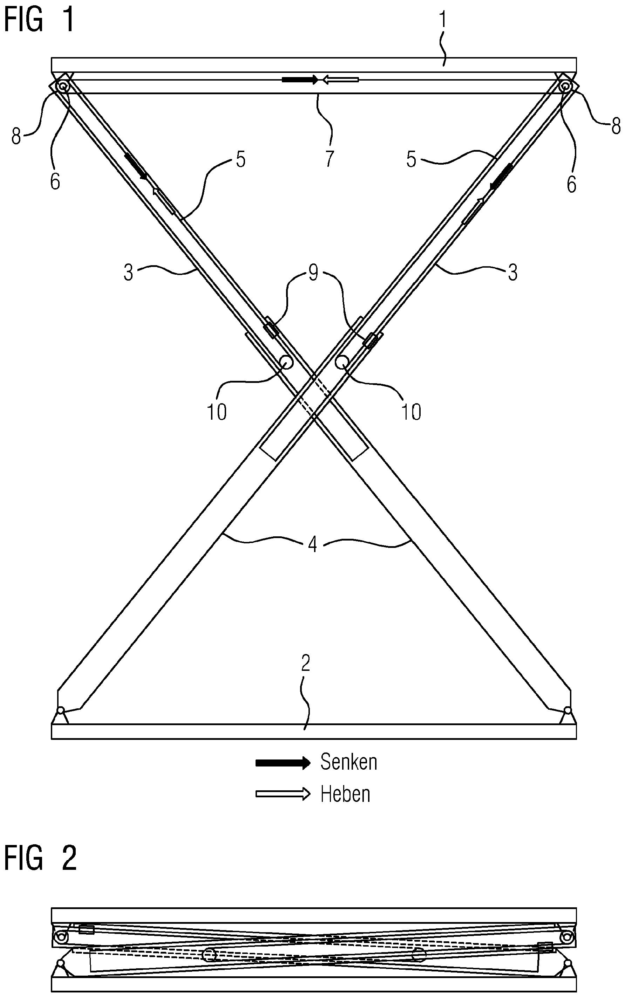

Die Figur 1 zeigt eine Anordnung zur Stabilisierung (Gehänge), bei der als Hubmittel zwischen Oberrahmen 1 und Traverse 2 (auch als "Unterrahmen" bezeichnet) Seile oder Bänder (in der Figur 1 nicht gezeigt) zum Einsatz kommen. Insbesondere im abgesenkten Zustand müssen Querbewegungen (Schwingen) der unteren Traverse 2 verhindert werden. Figur 1 zeigt dazu eine Verspannung und Stabilisierung von kreuzförmig zwischen Oberrahmen 1 und Traverse 2 angeordneten Teleskopstreben, bestehend aus Innenrohr 3 und Außenrohr 4, mithilfe von drei formschlüssigen Zugmitteln 5 (eines in jedem Teleskop) und **7.** Hier sind dafür Zahnriemen eingesetzt, alternativ können die Zahnriemen 5, 7 durch Ketten oder andere Zug- oder Übertragungsmittel ersetzt werden.

Zwei der drei formschlüssigen Zugmittel 5 (Zahnriemen) sind als "erste Zugmittel" jeweils im Innenrohr 3 einer Teleskopstrebe mit je zwei Scheiben 6 (äußere Scheibe) und 10 (innere Scheibe) - hier: Zahnriemenscheiben - an beiden Enden gelagert. Ein drittes formschlüssiges Zugmittel 7 **(z.B.** Zahnriemen) ist zwischen den zwei Teleskopstreben horizontal unterhalb des Oberrahmens ebenfalls auf zwei (Zahnriemen-) Scheiben 8 gelagert. Die auf einer Seite befindlichen (Zahnriemen-) Scheiben 6, 8 sind so gelagert, dass sich Drehbewegungen zwischen beiden Scheiben 6, 8 übertragen lassen. In jeder der zwei Teleskopstreben sind Außenrohr 4 und Innenrohr 3 über eine Klemmplatte 9, die das Zugmittel 5 (Zahnriemen) mit dem Außenrohr 4 verbindet, beweglich miteinander verbunden.

Wird das Außenrohr 4 in einer ersten der Teleskopstreben gegenüber dem zugehörigen Innenrohr 3 ein- oder ausgefahren, bewegt sich das Zugmittel 5 (z.B. Zahnriemen) durch die feste Verbindung mit der Klemmplatte 9 und die (Zahnriemen-) Scheibe 6 im Innenrohr beginnt sich zu drehen. Die Drehbewegung dieser am Oberrahmen im oder am Innenrohr 3 der ersten Teleskopstrebe befindlichen (Zahnriemen-) Scheibe 6 wird auf die unmittelbar benachbarte (Zahnriemen-) Scheibe 8 des dritten formschlüssigen Zugmittels 7 (Zahnriemen) übertragen. Dieses Zugmittel 7 (horizontal angeordneter Zahnriemen) beginnt sich ebenfalls in der gleichen Richtung zu bewegen und überträgt wiederrum die Drehbewegung auf die (Zahnriemen-) Scheibe 8 auf der gegenüberliegenden Seite. Dadurch wird die Drehbewegung an die in der zweiten Teleskopstrebe unterhalb des Oberrahmens gelagerten (Zahnriemen-) Scheibe 6 weitergeleitet. Die übertragene Drehbewegung führt zu einer Bewegung des Zugmittels 5 (Zahnriemen) im Innenrohr 3 der zweiten Teleskopstrebe und durch die Verbindung mit der Klemmplatte 9 wiederrum zu einem Aus- oder Einfahren des Außenrohrs 4 relativ zum zugehörigen Innenrohr 3. Dadurch, dass die Klemmplatte 9 einmal im Teleskop auf der Oberseite und im anderen Teleskop auf der Unterseite angeordnet ist, ist die Drehrichtung ausgeglichen.

Durch dieses Prinzip werden beide Außenrohre 4, sowohl beim Ein- als auch beim Ausfahren der Teleskopstreben, stets synchron verfahren. Dies verhindert eine ungewünschte Längenänderung der Teleskopstreben infolge von in Traversenlängsrichtung angreifenden Kräften und die Konstruktion stabilisiert sich selbst, d.h., dass ein Versatz bzw. Schwingen der Traverse 2 gegenüber dem Oberrahmen 1 in Fahrtrichtung (bezogen auf die Figur 1: nach links oder rechts) zuverlässig verhindert wird. Ein Versetzen oder Schwingen in Querrichtung (bezogen auf Figur 1: orthogonal zur Zeichenfläche) wird insbesondere dann verhindert, wenn die Teleskopstreben einen T-förmigen Lagerflansch (orthogonal zur Zeichenebene) aufweisen und somit nur innerhalb der gezeichneten Ebene verschwenken können und damit Querschwingungen orthogonal zur Zeichenebene oder Drehschwingungen der Traverse 2 gegenüber dem Oberrahmen 1 verhindern.

Die Figur 2 zeigt die Anordnung aus der Figur 1 in einem Zustand mit eingefahrenen Teleskopstreben.

In einer vorteilhaften Ausgestaltung erfolgt die Führung des Innenrohrs im Außenrohr der Teleskopstrebe mit einfach zu fertigenden Gleitschuhen anstelle der sonst oft üblichen Rollen- oder Kugellager. Diese Gleitschuhe werden zur einfachen Montage von außen in entsprechende Öffnungen im Außenrohr gesteckt und führen das Innenrohr. Sie sind vorzugsweise aus einem Werkstoff mit guten Gleiteigenschaften, z. B. Kunststoff, hergestellt. Diese Ausführung ist wartungsarm. Durch die Montage von außen ist ein Nachstellen (beispielsweise durch Austausch von Distanzstücken zwischen dem Außenrohr und einer Anlagefläche der Gleitschuhe / Gleitstücke) bzw. ein Austausch der Gleitschuhe einfach möglich. Zudem ergibt sich ein spielfreier und leiser Lauf.

Durch die vorstehend beschriebene Konstruktion und ihre geschilderten Varianten werden beide Innenrohre 3 sowohl beim Ein- als auch beim Ausfahren der Teleskopstreben synchron in den zugehörigen Außenrohren 4 verfahren. Dies verhindert eine ungewünschte Längenänderung der Teleskopstreben infolge von in Traversenlängsrichtung angreifenden Kräften, insbesondere beim Anfahren oder Abbremsen der Hubvorrichtung; die Konstruktion stabilisiert sich selbst und ein Hin- und Herschwingen, insbesondere im abgesenkten Zustand, der unteren Traverse wird gemindert bzw. verhindert.

## Patentansprüche

1. Vorrichtung zum Heben und Stabilisieren von Lasten, ins-besondere Gehänge für Fahrzeuge oder Fahrzeugteile, bestehend aus einem Rahmen (1) sowie einer darunter angeordneten, die Last aufnehmenden Traverse (2), die über an der Traverse (2) befestigte Hubmittel höhenverstellbar ist, und die mittels zwei sich kreuzender, im Wesentlichen in einer parallel zur Verfahrrichtung des Rahmens gedachten Vertikalebene verlaufender, einerseits am Rahmen und andererseits an der Traverse (2) verschwenkbar angelenkter und je ein Innenrohr (3) und ein Außenrohr (4) aufweisende Teleskopstreben stabilisierbar ist, die ihrerseits gegen unerwünschte Längenänderungen infolge in Traversenlängsrichtung angreifender Kräfte synchron verfahrend miteinander verbunden sind,
**dadurch gekennzeichnet,**
**dass** die Verbindung der Teleskopstreben mittels drei formschlüssiger Zugmittel (5, 7,) erfolgt,
**dass** je ein erstes formschlüssiges Zugmittel (5) jeweils im Innenrohr (3) einer Teleskopstrebe mit je einer inneren Scheibe (10) und einer äußeren Scheibe (6) an beiden Enden gelagert ist,
**dass** ein drittes formschlüssiges Zugmittel (7) horizontal zwischen den zwei Teleskopstreben auf zwei drehbaren Scheiben (8) gelagert ist,
**dass** die jeweils auf einer Seite befindlichen Scheiben (6,8) des jeweiligen ersten Zugmittels (5) und des dritten Zugmittels (7) derart miteinander verbunden sind, dass sich Drehbewegungen zwischen beiden Scheiben (6, 8) übertragen lassen, und
**dass** an der Innenwand der beiden Außenrohre (4) das jeweilige erste formschlüssige Zugmittel (5) befestigt ist, so dass eine Drehbewegung der äußeren Scheiben (6) zu einem entsprechenden synchronen Verfahren der jeweiligen Teleskopstrebe führt.

2. Vorrichtung nach Patentanspruch 1,
**dadurch gekennzeichnet,**
**dass** die ersten Zugmittel (5) durch jeweils einen Zahnriemen gebildet sind, und die äußeren Scheiben (6) als Zahnriemenscheiben ausgebildet sind.

3. Vorrichtung nach Patentanspruch 1,
**dadurch gekennzeichnet,**
**dass** die ersten Zugmittel (5) durch jeweils eine Kette gebildet sind, und die inneren und die äußeren Scheiben (6, 10) als Kettenräder ausgebildet sind.

4. Vorrichtung nach einem der vorhergehenden Patentansprüche,
**dadurch gekennzeichnet,**
**dass** die äußere Scheibe (6) und die damit verbundene Scheibe (8) des dritten Zugmittels jeweils auf einer gemeinsamen Drehachse angeordnet sind.

5. Vorrichtung nach Patentanspruch 4,
**dadurch gekennzeichnet,**
**dass** die Drehachse jeweils koaxial zu der Schwenkachse des Innenrohrs der jeweiligen Teleskopstrebe angeordnet ist.

6. Vorrichtung nach einem der vorhergehenden Patentansprüche,
**dadurch gekennzeichnet,**
**dass** zumindest auf einer Seite die äußere Scheibe (6) des ersten Zugmittels (5) und die auf dieser Seite angeordnete Scheibe (8) des dritten Zugmittels mittels einer Kupplung verbunden sind, wobei die Kupplung zu einer zumindest teilweisen Entkopplung der äußeren Scheibe (6) des ersten Zugmittels (5) und der Scheibe (8) des dritten Zugmittels (7) eingerichtet ist.

7. Vorrichtung nach Patentanspruch 6,
**dadurch gekennzeichnet,**
**dass** die Kupplung als Sicherheitskupplung ausgestaltet ist, wobei die Sicherheitskupplung bei Überschreiten eines Grenzdrehmoments zu der zumindest teilweisen Entkopplung eingerichtet ist.

8. Vorrichtung nach Patentanspruch 7,
**dadurch gekennzeichnet,**
**dass** die Sicherheitskupplung durch einen Scherstift oder eine Passfeder mit einer Sollbruchstelle gebildet ist, wobei mittels des Scherstifts oder der Passfeder im geschlossenen Zustand der Sicherheitskupplung eine Übertragung einer Drehbewegung zumindest einer der Scheiben (6, 8) auf die jeweils benachbarte Scheibe (6, 8) des anderen Zugmittels (5, 7) gegeben ist.

9. Vorrichtung nach einem der vorhergehenden Patentansprüche,
**dadurch gekennzeichnet,**
**dass** die Schwenklager der Innenrohre (3), die äußeren Scheiben (6) und das zweite Zugmittel (7) mit den zugeordneten drehbaren Scheiben (8) an einer unteren Traverse (2) der Vorrichtung angeordnet sind, und dass die Schwenklager der Außenrohre (4) an dem oberen Rahmen (1) angelenkt sind.

10. Vorrichtung nach einem der Patentansprüche 1 - 9,
**dadurch gekennzeichnet,**
**dass** die Schwenklager der Innenrohre (3), die äußeren Scheiben (6) und das zweite Zugmittel (7) mit den zugeordneten drehbaren Scheiben (8) an dem oberen Rahmen (1) der Vorrichtung angeordnet sind, und dass die Schwenklager der Außenrohre (4) an der unteren Traverse (2) angelenkt sind.

## Claims

1. Apparatus for lifting and stabilising loads, in particular suspension gear for vehicles or vehicle parts, the apparatus comprising a frame (1) and a cross-beam (2) which is arranged below the frame, receives the load and, via lifting means fastened to the cross-beam (2), is height-adjustable and can be stabilised by means of two telescopic struts that cross each other, run essentially in an imaginary vertical plane that is parallel to the direction of travel of the frame, and the telescopic struts are pivotably articulated on the one hand to the frame and on the other hand to the cross-beam (2) and each has an inner tube (3) and an outer tube (4) and for their part the telescopic struts are connected to each other so as to move synchronously to prevent undesired length changes as a result of forces acting in the longitudinal direction of the cross-beam,
**characterised in**
**that** the telescopic struts are connected by means of three positive-locking traction means (5, 7),
**that** in each case a first positive-locking traction means is mounted respectively in the inner tube (3) of a telescopic strut with in each case an inner pulley (10) and an outer pulley (6) at both ends,
**that** a third positive-locking traction means (7) is mounted horizontally between the two telescopic struts on two rotatable pulleys (8),
**that** the pulleys (6, 8) located respectively on a side of the respective first traction means (5) and the third traction means (7) are connected to each other in such a manner that rotational movements can be transmitted between the two pulleys (6, 8), and
**that** the respective first positive-locking traction means (5) is fastened to the inner wall of the two outer tubes (4) so that a rotational movement of the outer pulley (6) leads to a corresponding synchronous movement of the respective telescopic strut.

2. Apparatus according to claim 1,
**characterised in**
**that** the first traction means (5) are each formed by a toothed belt, and the outer pulleys (6) are designed as toothed belt pulleys.

3. Apparatus according to Claim 1,
**characterised in**
**that** the first traction means (5) are each formed by a chain, and the inner and the outer pulleys (6, 10) are designed as chain wheels.

4. Apparatus according to one of the preceding claims,
**characterised in**
**that** the outer pulley (6) and the pulley (8) of the third traction means connected thereto are arranged in each case on a common axis of rotation.

5. Apparatus according claim 4,
**characterised in**
**that** the axis of rotation is arranged in each case in a coaxial manner with respect to the pivot axis of the inner tube of the respective telescopic strut.

6. Apparatus according to one of the preceding claims,
**characterised in**
**that** at least on one side the outer pulley (6) of the first traction means (5) and the pulley (8) of the third traction means arranged on the same side, are connected by means of a coupling, wherein the coupling is configured so as to at least in part decouple the outer pulley (6) of the first traction means (5) and the pulley (8) of the third traction means (7).

7. Apparatus according to claim 6,
**characterised in**
**that** the coupling is designed as a safety coupling, wherein the safety coupling is configured so as at least in part to decouple when a limit torque is exceeded.

8. Apparatus according to claim 7,
**characterised in**
**that** the safety coupling is formed by a shear pin or a feather key with a predetermined breaking point, wherein when the safety coupling is in the closed state the shear pin or the feather key ensures that a rotational movement at least of one of the pulleys (6, 8) is transmitted to the respective adjacent pulley (6, 8) of the other traction means (6, 7).

9. Apparatus according to one of the preceding claims,
**characterised in**
**that** the pivot bearings of the inner tubes (3), the outer pulley (6) and the second traction means (7) with the associated rotatable pulley (8) are arranged on a lower cross-beam (2) of the apparatus, and that the pivot bearings of the outer tubes (4) are articulated to the upper frame (1).

10. Apparatus according to one of claims 1 - 9,
**characterised in**
**that** the pivot bearings of the inner tube (3), the outer pulleys (6) and the second traction means (7) with the associated rotatable pulleys (8) are arranged on the upper frame (1) of the apparatus, and that the pivot bearings of the outer tube (4) are articulated to the lower cross-beam (2).

## Revendications

1. Dispositif de levage et de stabilisation de charges, en particulier suspension de véhicule ou de parties de véhicule, consistant en un cadre (1) ainsi qu'en une traverse (2) qui est montée en-dessous, qui reçoit la charge, qui est réglable en hauteur par des moyens de levage fixés à la traverse (2) et qui peut être stabilisée au moyen de deux jambes télescopiques s'entrecroisant, s'étendant sensiblement dans un plan vertical imaginaire parallèlement à la direction de déplacement du cadre, articulées à pivotement d'une part au cadre et d'autre part à la traverse (2) et ayant chacune un tube (3) intérieur et un tube (4) extérieur, qui, de leur côté, sont assemblées entre elles avec déplacement en synchronisme à l'encontre de modifications de longueur non souhaitées en raison de forces s'appliquant dans la direction en longueur de la traverse,
**caractérisé**
**en ce que** l'assemblage des jambes télescopiques s'effectue au moyen de trois moyens (5, 7) de traction à complémentarité de forme,
**en ce que** respectivement un premier moyen (5) de traction à complémentarité de forme est monté respectivement dans le tube (3) intérieur d'une jambe télescopique en ayant respectivement un disque (10) intérieur et un disque (6) extérieur aux deux extrémités,
**en ce qu'**un troisième moyen (7) de traction à complémentarité de forme est monté horizontalement entre les deux jambes télescopiques sur deux disques (8) tournants,
**en ce que** les disques (6, 8), se trouvant d'un côté, du premier moyen (5) de traction respectif et du troisième moyen (7) de traction respectif sont reliés entre eux, en ce que des mouvements de rotation entre les deux disques (6, 8) peuvent être transmis, et
**en ce que** le premier moyen (5) de traction à complémentarité de forme respectif est fixé sur la paroi intérieure des deux tubes (4) extérieurs, de manière à ce qu'un mouvement de rotation du disque (6) extérieur emporte un déplacement en synchronisme correspondant de la jambe télescopique respective.

2. Dispositif suivant la revendication 1,
**caractérisé**
**en ce que** les premiers moyens (5) de traction sont formés par respectivement une courroie crantée et les disques (6) extérieurs sont constitués sous la forme de disques de courroie crantée.

3. Dispositif suivant la revendication 1,
**caractérisé**
**en ce que** les premiers moyens (5) de traction sont formés respectivement par une chaîne et les disques (6, 10) intérieurs et extérieurs sont constitués sous la forme de roues à chaîne.

4. Dispositif suivant l'une des revendications précédentes,
**caractérisé**
**en ce que** le disque (6) extérieur et le disque (8) qui y est relié du troisième moyen de traction sont montés respectivement sur un axe de rotation commun.

5. Dispositif suivant la revendication 4,
**caractérisé**
**en ce que** l'axe de rotation est disposé respectivement coaxialement à l'axe de pivotement du tube intérieur de la jambe télescopique respective.

6. Dispositif suivant l'une des revendications précédentes, **caractérisé**
**en ce qu'**
au moins sur une face le disque (6) extérieur du premier moyen (5) de traction et le disque (8) monté sur cette face du troisième moyen de traction sont assemblés au moyen d'un accouplement, dans lequel l'accouplement est agencé pour un désaccouplement partiel du disque (6) extérieur du premier moyen (5) de traction et du disque (8) du troisième moyen (7) de traction.

7. Dispositif suivant la revendication 6,
**caractérisé**
**en ce que**
l'accouplement est conformé en accouplement de sécurité, dans lequel l'accouplement de sécurité est conçu pour se désaccoupler au moins en partie lorsqu'un couple limite est dépassé.

8. Dispositif suivant la revendication 7,
**caractérisé**
**en ce que** l'accouplement de sécurité est formé par une goupille de cisaillement ou par une clavette ayant un point destiné à se rompre, dans lequel, au moyen de la goupille de cisaillement ou de la clavette, il y a, dans l'état fermé de l'accouplement de sécurité, une transmission d'un mouvement de rotation d'au moins l'un des disques (6, 8) au disque (6, 8) respectivement voisin de l'autre moyen (5, 7) de traction.

9. Dispositif suivant l'une des revendications précédentes,
**caractérisé**
**en ce que** le palier pivotant du tube (3) intérieur, les disques (6) extérieurs et le deuxième moyen (7) de traction avec les disques (8) tournants associés sont montés sur une traverse (2) inférieure du dispositif, et **en ce que** les paliers pivotants du tube (4) extérieur sont articulés au cadre (1) supérieur.

10. Dispositif suivant l'une des revendications 1 à 9,
**caractérisé**
**en ce que** les paliers pivotants du tube (3) intérieur, les disques (6) extérieurs et le deuxième moyen (7) de traction ayant les disques (8) tournants associés sont montés sur le cadre (1) supérieur du dispositif, et **en ce que** les paliers pivotants du tube (4) extérieur sont montés sur la traverse (2) inférieure.
